# EUROPEAN PATENT APPLICATION

(11) **EP 4 838 091 A1**
(43) Date of publication of application: **11.11.2026**
(21) Application number: 25175081.6
(22) Date of filing: 08.05.2025
(51) Int. Cl.: F03D 13/10

(54) **WIND TURBINE NACELLE, ARRANGEMENT AND METHOD FOR TRANSPORTING OR STORING A WIND TURBINE NACELLE OR AN ARRANGEMENT**

(71) Applicant: Nordex Energy SE & Co. KG, 22419 Hamburg (DE)
(72) Inventor: Wackrow, Torsten, 22419 Hamburg (DE)
(74) Representative: Epping - Hermann - Fischer

(57) **Abstract**

The invention relates to a wind turbine nacelle (106) configured for being mounted on a wind turbine tower (102) and for supporting a rotor assembly (108), the nacelle (106) The nacelle (106) comprising at least a first nacelle module (200), with a first supporting frame (204), wherein the first supporting frame is configured to bear the loads of the first nacelle module (200) and the loads of a further nacelle module placed on the first nacelle module (200).

The invention further relates to an arrangement comprising a first nacelle module (200), a second nacelle module (202) and a lower front frame (225) or two first or second nacelle modules (200,202) and two lower front frames (225) and a method for transporting or storing a wind turbine nacelle and the arrangements.

## Description

In wind energy construction projects, expensive space for example on a ship or in a storage area is needed for transportation and storage of the components of the wind turbines.

In an aspect of the present disclosure, it is provided a wind turbine nacelle configured for being mounted on a wind turbine tower and for supporting a rotor assembly, which may comprises at least a first nacelle module.

The first nacelle module may comprise a first supporting frame configured for bearing the loads of the first nacelle module.

The first supporting frame of the first nacelle module may be configured for bearing the loads of a further nacelle module stacked above the first nacelle module.

The first supporting frame of the first nacelle module may include a lower support structure, an upper support structure and lateral support structures.

The first supporting frame of the first nacelle module may comprise a box-like shape.

The lower support structure, the upper support structure and/or the lateral support structures may comprise lattice-like or cross-bar structures.

The lower support structure and the upper support structure may comprise first horizontal elements, and second horizontal elements configured to be joined conforming a 90° angle between them.

The lower support structure and the upper support structure may comprise 2 first horizontal elements, and 2 second horizontal elements configured to be joined in the shape of a rectangle.

The lower support structure and the upper support structure may comprise additional horizontal elements, configured to be located in a plane of the horizontal rectangle, adjoining the first or second horizontal elements.

The lower support structure and the upper support structure may comprise at least partially matching shapes.

The lateral support structures may comprise lateral elements, configured to adjoin horizontal elements of the lower and upper structure.

Such lateral elements may be disposed perpendicular to the horizontal elements. Lateral elements may also be located forming angles different from 90° with the horizontal elements or other lateral elements. Lateral elements may be located parallel to the upper or lower support structure.

The first supporting frame may comprise a connecting portion configured to be connected to a main frame.

The main frame may include a yaw plate, configured to be connected to the tower.

The connecting portion may connect to lateral elements of the lateral support structure of the first supporting frame.

The connecting portion may abut or be connected to the lower support structure of the first supporting frame.

The connecting portion may abut or be connected to the upper support structure of the first supporting frame.

The connecting portion may comprise lateral connecting elements in the plane of the lateral support structure.

Optionally the nacelle comprises a second nacelle module with a second supporting frame.

The second supporting frame of the second nacelle module may include a lower support structure, an upper support structure and lateral support structures.

The first supporting frame of the first nacelle module may comprise a box-like shape.

The lower support structure, the upper support structure and/or the lateral support structures may comprise lattice-like or cross-bar structures.

The lower support structure and the upper support structure may comprise first horizontal elements, and second horizontal elements configured to be joined conforming a 90° angle between them.

The lower support structure and the upper support structure may comprise 2 first horizontal elements, and 2 second horizontal elements configured to be joined in the shape of a rectangle.

The lower support structure and the upper support structure may comprise additional horizontal elements, configured to be located in a plane of the horizontal rectangle, adjoining the first or second horizontal elements.

The lateral support structures may comprise lateral elements, configured to adjoin horizontal elements of the lower and upper structure.

Such lateral elements may be disposed perpendicular to the horizontal elements. Lateral elements may also be located forming angles different from 90° with the horizontal elements or other lateral elements. Lateral elements may be located parallel to the upper or lower support structure.

The first nacelle module may be shipped to the installation site together with the main frame.

The first nacelle module with the main frame may be longer than the second nacelle module

Optionally, the second nacelle module is configured to be placed on the first nacelle module during transportation or storage.

In this embodiment, the first supporting frame of the first nacelle module is configured to support a second nacelle module during transportation or storage.

Thus, a second nacelle module may be placed on the first nacelle module during transportation or storage and the first nacelle module is used to support the second nacelle module during transportation or storage.

In an alternative option a further first nacelle module is configured to be placed on the first nacelle module during transportation or storage.

In this embodiment, the first supporting frame of the first nacelle module is configured to support a further first nacelle module during transportation or storage.

Thus, the first nacelle module is used to support a further first nacelle module during transportation or storage.

In any of the options a reduction in the area which is needed for transporting or storing a nacelle module may be achieved.

According to an embodiment, the first supporting frame is configured to support the main frame during transportation or storage and prior to mounting of the first nacelle module on the tower.

In an embodiment, it is provided a lower front frame configured to support the main frame of the first nacelle module and to be placed below the main frame of the first nacelle module.

In an embodiment, it is provided an arrangement comprising a wind turbine first nacelle module and a lower front frame configured to support the main frame of the first nacelle module and to be placed below the main frame of the first nacelle module.

The lower front frame may be configured for carrying most of the weight of the main frame. This reduces the load and forces that the weight of the main frame exerts on the first supporting frame during transportation and storage.

Optionally, the arrangement comprises a first nacelle module, a lower front frame and a second nacelle module placed on the first nacelle module.

Optionally, the arrangement comprises two first nacelle modules of a wind turbine and two lower front frames wherein one first nacelle module is placed on a further first nacelle module for transportation or storage and each lower front frame is placed below the main frame of one of the two first nacelle modules.

According to embodiments, the lower front frame is used for the support of the main frame of the first nacelle module on a surface, but also the lower front frame is used to support the main frame of the upper first nacelle module when two nacelle modules are placed above each other.

According to an embodiment, a connection frame is fixed to the bottom side and/or the upper side of the main frame. The connection frame may be configured to protect the main frame and the lower front frame could be fixed to the connection frame and doesn't need to be fixed directly to the main frame.

Alternatively, it is also possible to fix the lower front frame directly to the bottom side and/or top side of the main frame. The lower front frame may only be fixed to the bottom side of the main frame.

A method for transporting and storing a wind turbine nacelle may comprise the following steps:
- placing the first or second nacelle module on a transport vehicle or support surface,
- placing the first or second nacelle module on the first or second nacelle module.

The method may further comprise:
- connecting a lower front frame to the first nacelle module before placing the first nacelle module on a transport vehicle or support surface.

Also in this method, the method may further comprise:
- connecting a lower front frame to each first nacelle module before placing the first nacelle module on the transport vehicle or support surface and before placing a further nacelle module on top of the first nacelle module.

Further features and further developments are set out by the following exemplary embodiments, which are explained in conjunction with the attached figures. The same or similar elements or elements acting in the same way are provided with the same reference numerals in the following figures, even if they belong to different embodiments.
Figure 1 shows the main components of a wind turbine;
Figure 2 shows a first nacelle module and a second nacelle module without a housing,
Figure 3 shows a first nacelle module and a second nacelle module with a housing;
Figure 4 shows two first nacelle modules stacked without housing;
Figure 5 shows two first nacelle modules stacked with housing;
Figure 6 shows a first nacelle module stacked above a second nacelle module; and
Figure 7 shows a part of the lower transport frame and connection frame in perspective view.

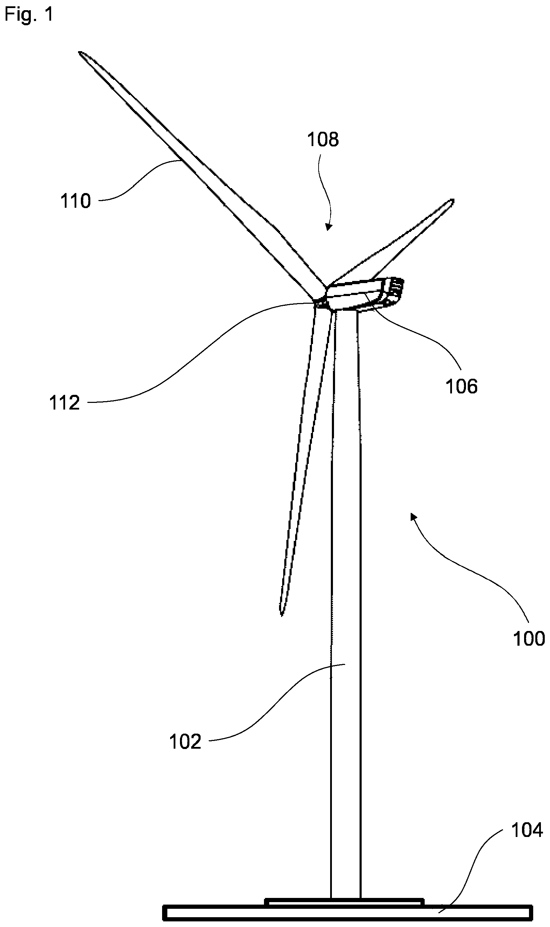

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted.

The nacelle 106, for example, comprises a generator which is coupled to a rotor 108 via a rotor shaft (not shown). The rotor 108 comprises one or more (wind turbine) rotor blades 110, which are movably arranged on a rotor hub 112.

During operation, the rotor 108 is set in rotation by an air flow, for example wind interacting with the blades 110 resulting in forces acting on the blades 110. This rotational movement is transmitted to the generator via the transmission supporting the rotor shaft, with or without a gearbox. The generator converts the mechanical energy of the rotor 108 into electrical energy.

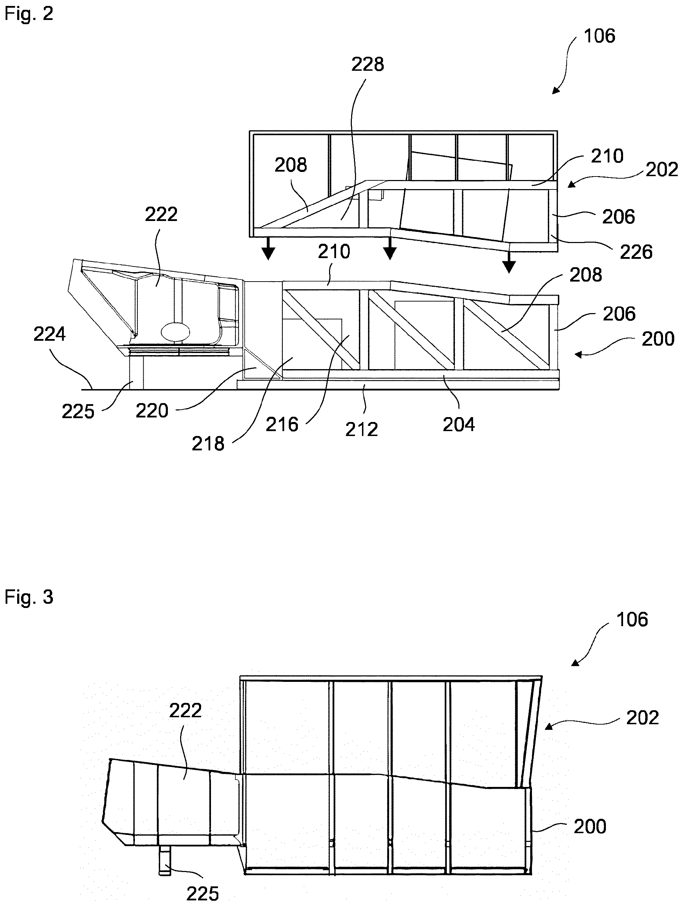

Figure 2 shows, in side view, a first nacelle module 200 and a second nacelle module 202 of a wind turbine nacelle 106. The first nacelle module 200 and the second nacelle module 202 are shown without a housing so that the inner components of the first nacelle module 200 and the second nacelle module 202 can be seen. The first nacelle module 200 comprise a first supporting frame 204 which comprises vertical beams 206, diagonal beams 208 and horizontal beams 210 as well as a base frame 212 which together build a first compartment 216 in which components, are received.

The first compartment comprises a box-like shape. The base frame 212 is constructed as a lower support structure 212. The sidewalls of the first compartment 216 are constructed as lateral support structures 214 and the top side is constructed as the upper support structure (indicated by the horizonal beam 210).

Each support structure comprises lattice like or cross bar structures as indicated by the vertical, diagonal and horizontal beams 206, 208 and 210. Each of the lower and upper support structure comprise first and second horizontal elements configured to be joined forming an 90° angle between them.

The first supporting frame 206 comprises a connecting portion 220 on the side which is in the installed state directed to the tower 102. A main frame 222 is attached at the connecting portion 220. In the installed state, the main frame 222 is supported by the wind turbine tower 102. The first nacelle module 200 is supported by the main frame 222 via the connecting portion 220. The main frame 222 has the function of supporting the drive train of the wind turbine 100 as well as the first and second nacelle module 200 and 202, when installed on the tower.

The first nacelle module 200 is placed on the ground 224, indicated by a black line. The ground 224 can be the deck of a ship or the ground of another transportation device or a storage area. Between the main frame 222 and the ground 224, a lower front frame 225 is located which carries the weight or a major part of the weight of the main frame 222.

The second nacelle module 202 comprises a second supporting frame 226 which comprises vertical beams 206, horizontal beams 210 and diagonal beams 208. This second supporting frame 226 builds a second compartment 228 in which components, are received.

The second compartment 228 comprises a box-like shape. The bottom side of the second compartment 228 is constructed as a lower support structure.

The sidewalls of the second compartment 228 are constructed as lateral support structures and the top side is constructed as the upper support structure (indicated by the horizonal beam 210).

Each support structure comprises lattice like or cross bar structures as indicated by the vertical, diagonal and horizontal beams 206, 208 and 210.

Each of the lower and upper support structure comprise first and second horizontal elements configured to be joined forming an 90° angle between them.

As shown in Figure 2, this second nacelle module 202 can be placed on the first nacelle module 200 (indicated by the black arrows). The top surface of the first nacelle module is complementary to the bottom surface of the second nacelle module.

Figure 3 shows, in side view, the wind turbine nacelle 106 wherein the second nacelle module 202 is placed on the first nacelle module 200. The main frame 222 is attached to the first nacelle module 200 and the main frame 222 is supported on its bottom side via a lower front frame 225 which bears most of the weight of the main frame 222.

In Figure 3 the first nacelle module 200, the second nacelle module 202 and also the main frame 222 are shown with a housing.

By placing the second nacelle module 202 on the first nacelle module 200 during transportation or storage, a lot of storage space is saved which reduces the cost significantly.

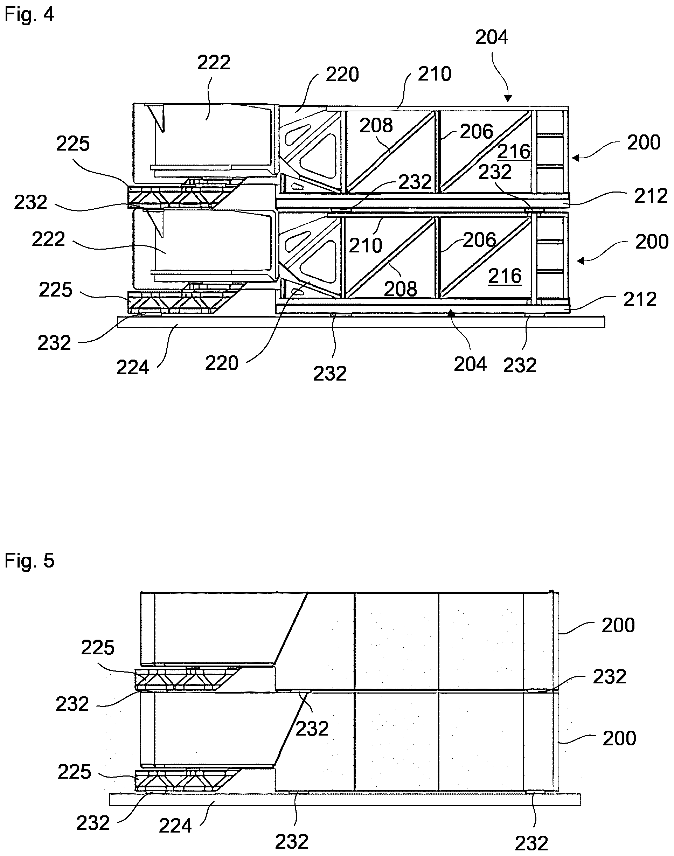

Figures 4 and 5 show a different embodiment wherein two first nacelle modules 200 are placed above each other for transportation or storage.

Figure 4 shows, in side view, two first nacelle modules 200 stacked above each other. Both first nacelle modules 200 are shown without a housing. The first nacelle module 200 comprises first supporting frames 204 with vertical beams 206, diagonal beams 208 and horizontal beams 210 as well as a base frame 212 which together build the first compartment 216 as described in connection with Figure 2.

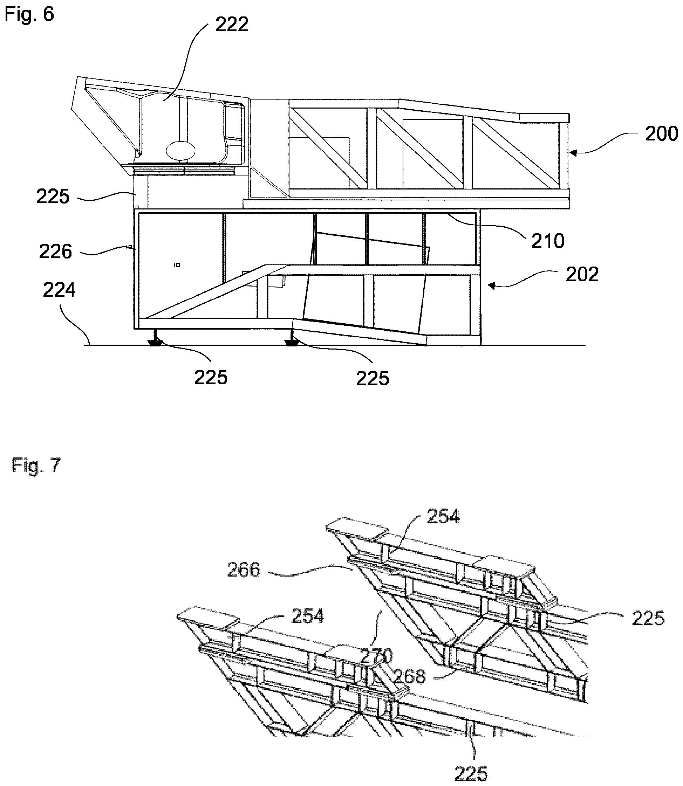

The main frame 222 is attached to the first supporting frame 204 by the connecting portion 220 which is slightly differently designed in this embodiment compared to the embodiment shown in Figure 2. The arrangement shown in Figure 4 shows two lower front frames 225 which are fixed to the bottom side of the main frame 222. The lower front frames 225 shown in Figure 4 have a different design than the lower front frame shown in Figure 2. The lower front frame 225 in Figure 4 is fixed directly to the main frame 222 or via a connection frame 254 (see Figure 7). In the latter case the connection frame 254 is first attached to the main frame 222 and then the lower front frame 225 is fixed to the connection frame 254.

For each nacelle module 200 two lower front frames 225 may be used placed parallel and in a longitudinal direction of the nacelle module 200 (see also Figure 7).

As shown in Figure 4, the two first nacelle modules 200 are stacked above each other for transportation or storage. This is possible because the first supporting frame 204 is designed with horizontal, vertical and diagonal beams. Therefore, the first supporting frame 204 is stable enough to carry the weight of a further first nacelle module 200.

The main frame 222 is connected to the first supporting frame 204 via the connecting portion 220. Further, the main frame 222 is supported by the lower front frame 225 which is placed between the main frame 222 and the ground 224 which is, for example, a storage area or the ship deck. The lower front frame 225 of the upper first nacelle module 200 is placed between the main frame 222 and the top side of the main frame 222 of the lower first nacelle module 200.

To secure the first nacelle module 200 on ground there are so-called transport connections 232 placed between the bottom side of the first supporting frame 204 and the ground 224 and also between the lower front frame 225 and the ground 224.

Further transport connections 232 are also arranged between the top side of the lower first nacelle module 200 and the bottom side of the upper further first nacelle module 200. Further, a transport connection 232 is installed between the lower front frame 225 and the top side of the lower main frame 222. The transport connection 232 can be realized as bolts or twist locks in order to secure the first nacelle modules 200 for transport.

Figure 5 shows the arrangement of Figure 4 with a housing. The two first nacelle modules 200 are exactly placed above each other. The sidewalls of the first nacelle modules 200 are building a continuous vertical plane.

If a nacelle comprises only a first nacelle module and not a second nacelle module two nacelles can be stacked above each other.

Figure 6 shows an embodiment in which a first nacelle module 200 is stacked above a second nacelle module 202. The second nacelle module is supported by two lower front frames 225 on the ground 224. The first nacelle module 200 is supported by a lower front frame 225 placed on the top side of the second nacelle module 202. The top side of the second nacelle module 202 is configured as the upper support structure 210 of the second supporting frame 226.

Figure 7 shows a perspective view of a part of the lower front frame 225. As can be seen in Figure 7, two lower front frames 225 are used which are placed in a longitudinal direction of the nacelle module 200. Above the lower front frames 225, two connection frames 254 are placed which can be attached to the bottom side of the main frame 222, especially to the inner bearing ring. For example, the lower front frames 225, as well as the connection frames 254, are made out of steel. In this example, the lower transport frames comprise an upper member 266, a lower member 268 and diagonal members 270 between the upper member 266 and the lower member 268.

At the front end the lower front 225 may comprise a vertical end.

At the rear end the lower front frame 225 and also the connection frame 254 comprise an angled shape for saving material and weight. Other shapes of the rear end of the lower front frame 225 and the connection frame 254 are also possible.

Now the method for transporting or storing a wind turbine nacelle as shown in Figure 3 is described.

In a first step, the lower front frame 225 is fixed to the bottom side of the main frame 225 or via a connection frame between the lower front frame 225 and the main frame 222.

In a second step, the first nacelle module is placed on a transport vehicle or a support surface.

In a third step, the second nacelle module 202 is placed on the first nacelle module 200.

Now, the method for transporting an arrangement as shown in Figures 4 or 5 is described.

In a first step, the lower front frame 225 is fixed to each of the two first nacelle modules 200.

In a second step, the first nacelle module 200 is placed on a transport vehicle or support surface.

In a third step, the further first nacelle module 200 is placed on top of the first nacelle module 200 for transportation or storage.

In a fourth step the first nacelle modules 200 are secured by the transport connection 232.

### List of reference signs

- 100: wind turbine
- 102: tower
- 104: foundation
- 106: nacelle
- 108: rotor
- 110: rotor blade
- 112: rotor hub
- 200: first nacelle module
- 202: second nacelle module
- 204: first supporting frame
- 206: vertical beams
- 208: diagonal beams
- 210: horizontal beams, upper support structure
- 212: base frame, lower support structure
- 214: lateral support structure
- 216: first compartment
- 220: connecting portion
- 222: main frame
- 224: ground, ship deck
- 225: lower front frame
- 226: second supporting frame
- 228: second compartment
- 232: transport connection
- 254: connecting frame
- 266: upper member
- 268: lower member
- 270: diagonal member

## Claims

1. A wind turbine nacelle (106) configured for being mounted on a wind turbine tower (102) and for supporting a rotor assembly (108),
- the nacelle (106) comprising at least a first nacelle module (200), with a first supporting frame (204),
**characterized in**
- **that** the first supporting frame is configured to bear the loads of the first nacelle module and the loads of a further nacelle module placed on the first nacelle module (200).

2. A wind turbine nacelle according to claim 1, wherein the nacelle (106) comprises a second nacelle module (202) with a second supporting frame (226).

3. A wind turbine nacelle according to claim 2, wherein the second nacelle module (202) is configured to be located on the first nacelle module (200) during operation of the wind turbine.

4. A wind turbine nacelle according to any of the preceding claims,
**characterized in**
- **that** the second nacelle module (202) is configured to be placed on the first nacelle module (200) during transportation or storage or
- **that** a further first nacelle module (200) is configured to be placed on the first nacelle (200) module during transportation or storage or
- **that** a further second nacelle module (200) is configured to be placed on the second nacelle module (200) during transportation or storage or
- **that** the first nacelle module (200) is configured to be placed on the second nacelle module (200) during transportation or storage.

5. A wind turbine nacelle according to any of the preceding claims, wherein
- the first nacelle module (200) comprises a main frame (222), and wherein,
- when the nacelle (106) is mounted on the wind turbine tower (102), the main frame (222) is supported by the wind turbine tower (102).

6. A wind turbine nacelle according to any of the preceding claims, wherein
- the first nacelle module (200) is used to support the second nacelle module (202) during transportation or storage or
- the first nacelle module (200) is used to support a further first nacelle module (200) during transportation or storage. or
- the second nacelle module (202) is used to support a further second nacelle module (202) during transportation or storage or
- the second nacelle module (202) is used to support the first nacelle module (200) during transportation or storage.

7. A wind turbine nacelle according to the preceding claims, wherein the first or second supporting frames comprise
- a lower support structure, an upper support structure and lateral support structures and/or
- a box-like shape and/or
- lattice- like or cross-bar structures and/or
- first horizontal elements and second horizontal elements configured to be joined conforming a 90° angle between them, in order to carry the load of a further nacelle module.

8. Wind turbine including a nacelle according to any of the preceding claims.

9. Arrangement comprising a wind turbine nacelle according to claim 5 and a lower front frame (225), wherein
- the lower front frame (225) supports the main frame (222) of the first nacelle module (200) and is placed below the main frame (222) of the first nacelle module (200).

10. Arrangement comprising a wind turbine nacelle according to claim 5 and a lower front frame (225), wherein
- a second nacelle module (202) is placed on the first nacelle module (200) for transportation or storage and
- the lower front frame (225) supports the main frame (222) of the first nacelle module (200) and is placed below the main frame (222) of the first nacelle module (200).

11. Arrangement comprising two first nacelle modules (200) of a wind turbine nacelle according to claim 5, and two lower front frames (225), wherein
- one first nacelle module (200) is placed on the other first nacelle module (200) for transportation,
- each lower front frame (225) supports the main frame (222) of one of the two first nacelle modules (200) and is placed below the main frame (222) of one of the two first nacelle modules (200).

12. Lower front frame for an arrangement according to claim 9, wherein the lower front frame (225) is configured to be fixed to the main frame (222) or a connecting frame (254) which is fixed to the main frame (222).

13. Method for transporting or storing wind turbine nacelle according to claim 2, comprising the following steps:
- placing the first or second nacelle module (200,202) on a transport vehicle or support surface (224),
- placing a first or second nacelle module (200,202) on the first or second nacelle module (200,202).

14. Method according to claim 13, comprising
- connecting a lower front frame (225) to the first nacelle module (200) before placing the first nacelle module (200) on a transport vehicle or support surface (224).

15. Method for transporting or storing a wind turbine nacelle according to claim 1, comprising the following steps:
- placing the first nacelle module (200) on the transport vehicle or support surface (224),
- placing a further nacelle module (200) on top of the first nacelle module (200).
